(19) Europäisches Patentamt
European Patent Office
Office européen des brevets

(11) **EP 2 932 255 B1**

(12) **FASCICULE DE BREVET EUROPEEN**

(45) Date de publication et mention
de la délivrance du brevet:
**26.06.2019 Bulletin 2019/26**

(21) Numéro de dépôt: **13821862.3**

(22) Date de dépôt: **06.12.2013**

(51) Int Cl.:
*G01N 29/04* *(2006.01)*    *G01N 29/07* *(2006.01)*

(86) Numéro de dépôt international:
**PCT/FR2013/052985**

(87) Numéro de publication internationale:
**WO 2014/096617 (26.06.2014 Gazette 2014/26)**

(54) **PROCEDE DE CARACTERISATION D'UNE PIECE EN MATERIAU COMPOSITE**

VERFAHREN ZUR CHARAKTERISIERUNG EINES TEILS AUS EINEM VERBUNDSTOFF

METHOD FOR CHARACTERISING A PART MADE OF A COMPOSITE MATERIAL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **17.12.2012 FR 1262155**

(43) Date de publication de la demande:
**21.10.2015 Bulletin 2015/43**

(73) Titulaire: **Safran Aircraft Engines
75015 Paris (FR)**

(72) Inventeurs:
• **CHATELLIER, Jean-Yves, François, Roger**
**77550 Moissy-cramayel Cedex (FR)**
• **BROUSSAIS-COLELLA, Nicolas**
**77550 Moissy-cramayel Cedex (FR)**
• **DUVAL, Jérémy**
**77550 Moissy-cramayel Cedex (FR)**
• **MARQUIS, Jérémy, Nicolas**
**77550 Moissy-cramayel Cedex (FR)**
• **MEYER, Anne**
**77550 Moissy-cramayel Cedex (FR)**

(74) Mandataire: **Perrot, Emilie et al
Cabinet Beau de Loménie
158 Rue de l'Université
75340 Paris Cedex 07 (FR)**

(56) Documents cités:
FR-A1- 2 959 817    JP-A- H05 172 793
US-A- 5 181 421    US-A- 5 408 882
US-A- 5 824 908    US-A1- 2004 050 165
US-A1- 2009 277 269

**Description**

Domaine technique et art antérieur

L'invention s'inscrit dans le domaine des procédés de caractérisation de pièces en matériau composite, pour l'industrie mécanique, en particulier l'industrie aéronautique.

Au cours du développement d'une pièce donnée, il est nécessaire de connaître les taux de fibres et de résine dans une zone donnée de la pièce. Pour cela, il est connu de mesurer la vitesse de propagation et l'atténuation d'une onde ultrasonore longitudinale transitant dans la pièce. Une méthode pour mesurer ces grandeurs est d'utiliser un transducteur ultrasonore en mode émetteur/récepteur. On s'intéresse alors à une zone de la pièce délimitée par une surface de front et une surface de fond parallèles l'une à l'autre. L'onde longitudinale est dirigée de manière à se propager orthogonalement aux deux surfaces, se réfléchissant partiellemement et la matière de la pièce provoquant de plus une atténuation. On observe donc un premier écho, provenant de la surface de front, et un deuxième écho, provenant de la surface de fond appelé écho de fond. Le transducteur reçoit l'onde réfléchie, et il est possible ensuite de déduire de l'observation des deux composantes réfléchies, la vitesse de propagation et l'atténuation de l'onde dans la matière.

Cette solution ne convient néanmoins pas aux matériaux absorbant fortement les ondes ultrasonores. C'est le cas par exemple des composites tissés 3D dont la structure est inhomogène et anisotrope. Aucun écho de fond n'est visible sur les enregistrements effectués sur ces matériaux, du fait de la forte absorption, pour des épaisseurs de pièces industrielles.

Il est donc nécessaire de mettre au point un procédé appliqué aux pièces en matériaux composites permettant de caractériser un grand nombre de pièces, indépendamment de leur épaisseur ou de leur caractère absorbant.

Le document US 5 824 908 décrit un procédé de caractérisation sans contact et d'inspection de matériaux.

Le document US 5 408 882 décrit un procédé non destructif d'évaluation de polymère composites.

Le document US 2009/277269 décrit un procédé de test par transmission ultrasonore.

Le document US 2004/0050165 décrit un procédé pour déterminer une épaisseur de paroi et la vitesse du son dans un tube à partir de pulsations ultrasonores réfléchies et transmises.

Le document JPH 05172793 décrit un procédé de caractérisation d'une pièce comprenant la détermination de l'atténuation d'ondes ultrasonores, au moyen d'une paire de transducteurs séparés par un liquide, tel que de l'eau, où on mesure les temps de propagation d'ondes réfléchies par respectivement une première face et une deuxième face de la pièce pour déterminer son épaisseur.

Définition de l'invention et avantages associés

L'invention est définie dans la revendication indépendante.

L'invention porte sur un procédé de caractérisation d'une pièce en matériau composite, comprenant une étape de détermination d'une caractéristique d'une onde ultrasonore longitudinale effectuant un parcours dans la pièce, où on mesure le temps de parcours d'une onde transmise par la pièce. Grâce à cette technique, on surmonte le problème lié à l'absence d'écho de fond dans les mesures en mode émission/réception.

Selon une caractéristique avantageuse, on mesure le temps de parcours de l'onde transmise en observant la naissance de l'onde.

Grâce à cette caractéristique, on s'affranchit des problèmes très amplifiés de déphasage et de déformation du signal sinusoïdal de l'onde ultrasonore utilisée, causés par des matériaux épais, ou à la structure complexe, inhomogène et anisotrope, comme certains matériaux composites.

On détermine la vitesse de propagation de l'onde ultrasonore longitudinale effectuant un parcours dans la pièce.

On obtient ainsi une information utile pour la détermination du taux de fibres et du taux de résine d'un matériau composite, qui peuvent être exploités pour la mise au point de la pièce étudiée.

On mesure de plus l'amplitude de l'onde transmise pour déterminer l'atténuation, globale ou linéique, subie par l'onde ultrasonore longitudinale effectuant un parcours dans la pièce.

On obtient une information utile pour la détermination du taux de porosités, qui peut être exploité pour la mise au point de la pièce étudiée.

De préférence, on mesure le temps de propagation d'une onde ultrasonore transmise en l'absence de la pièce et les temps de propagation d'ondes ultrasonores réfléchies par respectivement une première face de la pièce et une deuxième face de la pièce pour déterminer la dimension de la pièce qui est parcourue par l'onde ultrasonore longitudinale effectuant un parcours dans la pièce.

Grâce à cette caractéristique, optionnelle mais avantageuse, on mesure précisément la dimension de la pièce qui va être parcourue par l'onde transmise, alors qu'une telle dimension est assez variable sur des pièces en matériau composite, et qu'il est donc utile d'en avoir une valeur exacte pour la pièce donnée, pour le parcours précis de l'onde ultrasonore utilisée.

Le procédé est notamment mis en oeuvre pour une pièce en matériau composite tissé 3D.

Ces matériaux présentent un défi particulier pour leur caractérisation, du fait de leur inhomogénéité et de leur anisotropie. Grâce à l'invention, on est en mesure de les étudier rapidement, avec fiabilité, notamment au cours de la phase de mise au point des pièces.

Brève description des figures

La figure 1 représente une opération préliminaire dans le cadre de la mise en oeuvre d'un procédé selon l'invention.
La figure 2 présente les trois étapes d'une phase de mesure d'épaisseur, mise en oeuvre dans l'invention.
Les figures 3 à 5 présentent les signaux enregistrés au cours des trois étapes de la figure 2.
La figure 6 présente l'étape d'observation d'une onde transmise, au cours d'un procédé selon l'invention.
La figure 7 présente le signal mesuré au cours de l'étape de la figure 6.
Les figures 8 à 10 présentent des signaux obtenus lors des étapes des figures 2 et 6 pour une cale en matériau composite.

Description détaillée d'un mode de réalisation

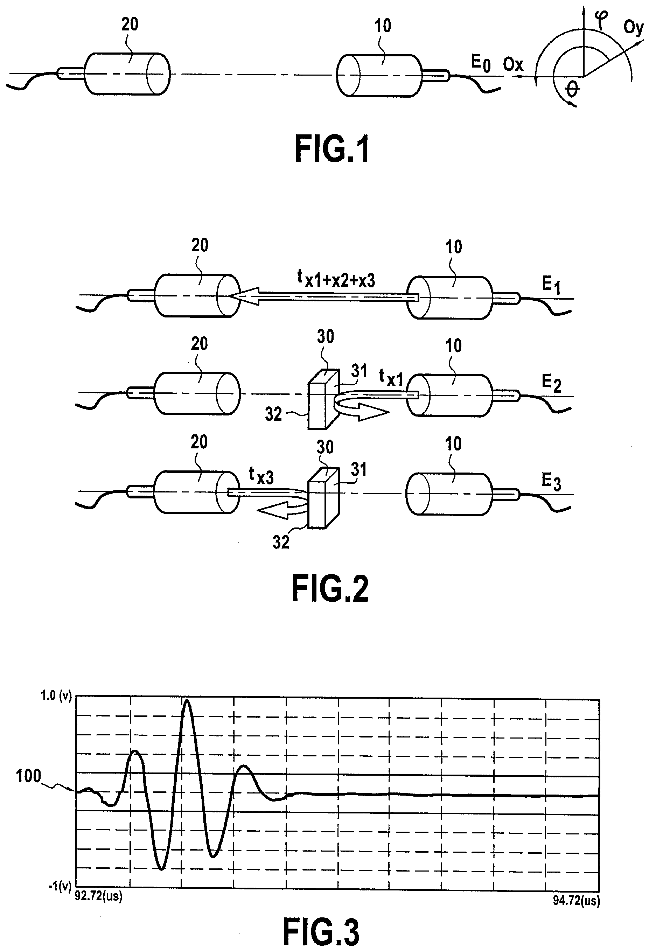

En référence à la **figure 1,** on procède à un alignement de deux capteurs ultrasonores plans fonctionnant en mode transmission. Cet alignement constitue une étape préliminaire E0. Ces capteurs sont séparés par un liquide, tel que de l'eau. Le transducteur 10 fonctionne en mode émission, et le capteur 20 en mode réception. Le signal reçu par le capteur 20 passe par un maximum après réglages successifs des axes Oy et Oz, ainsi que des angles $\theta$ et $\varphi$.

En **figure 2,** on mesure l'épaisseur du matériau de la pièce à étudier, référencée 30. La mesure doit être précise au micromètre prés.

Une première étape E1 consiste à mesurer le temps de parcours de l'onde transmise par l'eau entre les deux transducteurs 10 et 20, en l'absence de la pièce. Une deuxième étape consiste à mesurer le temps de parcours de l'onde réfléchie par la première surface, notée 31, de la pièce 30, le transducteur 10 fonctionnant en émetteur/récepteur et faisant face à la surface 31. Une troisième étape consiste à mesurer le temps de parcours de l'onde réfléchie par la deuxième surface, notée 32, de la pièce 30, le transducteur 20 fonctionnant à son tour en émetteur/récepteur et faisant face à la surface 32.

Le temps de parcours est mesuré à chaque fois en observant la naissance du signal, et non une arche du signal. Cela permet à l'opérateur de faire abstraction de tout phénomène lié à un éventuel déphasage du signal. En effet, en présence de réflexions multiples, des déphasages apparaissent. C'est également le cas quand après une réflexion, le signal est inversé. La forme des arches du signal est modifiée, et il est difficile d'obtenir une valeur précise pour le temps de parcours. C'est pour cela qu'il est proposé de mesurer celui-ci en observant uniquement la naissance du signal.

La vitesse de propagation de l'onde dans l'eau Veau étant connue, on peut, par soustraction, obtenir des étapes E1, E2 et E3, l'épaisseur de la pièce, par la formule $X_2 = (t_{X1+X2+X3} - t_{X3} - t_{X1}).V_{eau}$, X1 étant la distance entre le transducteur 10 et la surface 31, X2 l'épaisseur de la pièce au point d'impact du faisceau et X3 étant la distance entre le transducteur 20 et la surface 32, et tX1+X2+X3, tX1 et tX3 étant les temps de parcours mesurés au cours des étapes E1, E2 et E3, respectivement.

Les **figures 3 à 5** montrent les tracés visualisés lors des étapes E1, E2 et E3, respectivement, avec de l'eau à 22°C, une onde de fréquence 5 MHz (d'où une vitesse de propagation de 1486,54 m/s dans l'eau), pour une cale en titane TA6V d'épaisseur 76, 20 mm. Le temps de parcours de l'onde est mesuré sur la base de la naissance de l'onde, référencée respectivement 100, 110 et 120.

On obtient les résultats suivants :

$t_{X1+X2+X3}$ = 92,72 $\mu$s
$t_{X3}$ = 52,98/2 = 26,49 $\mu$s
$t_{X1}$ = 29,94/2 = 14,97 $\mu$s
X2=(tX1+X2+X3-tX3-tX1).Veau
X2=(92,72.$10^{-6}$ - 26,49.$10^{-6}$ - 14,97.$10^{-6}$).1 486,54
X2=76,20 mm

L'épaisseur mesurée au pied à coulisse est bien de 76,20 mm, soit 3".

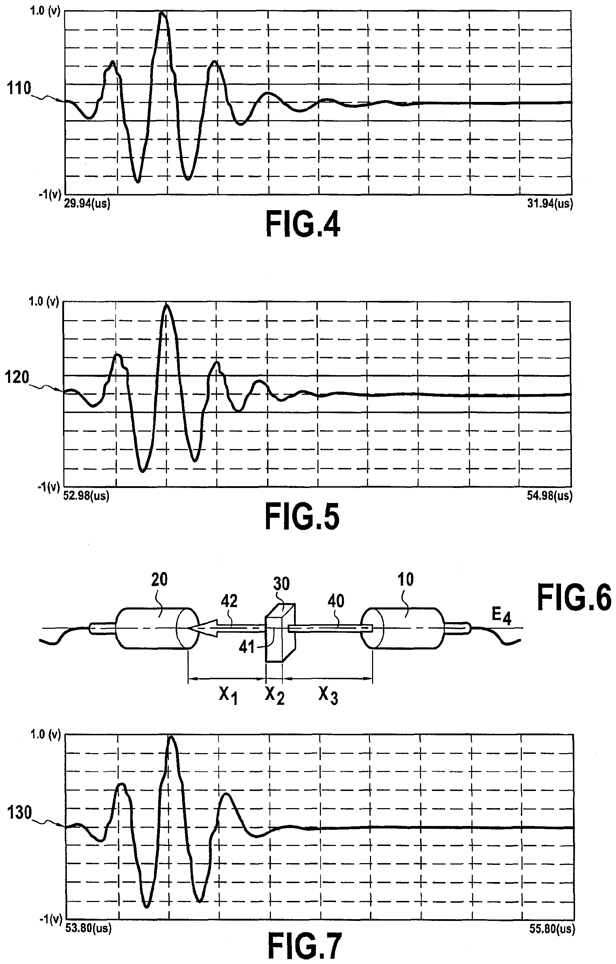

En **figure 6,** on a représenté l'étape E4 au cours de laquelle on observe l'onde transmise par la pièce 30. Ainsi, le transducteur 10 fonctionne en mode émetteur, alors que le transducteur 20 fonctionne en mode récepteur. L'onde incidente est référencée 40 sur la figure, l'onde se propageant dans la pièce 30 est référencée 41 et l'onde transmise est référencée 42.

Le temps de parcours de l'onde dans la pièce 30 s'exprime sous la forme $t'_{X2} = t - (t_{X1}+t_{X3})$. Connaissant X2 déterminée précédemment, la vitesse de propagation de l'onde dans le matériau s'exprime sous la forme $V_{matériau} = X2 / t'_{X2}$.

La **figure 7** présente le signal observé pour la cale en titane (TA6V) d'épaisseur 76, 20 m, toujours avec une onde à 5 MHZ au cours de l'étape E4. Le temps de parcours de l'onde est mesuré sur la base de la naissance de l'onde, référencée 130.

Les valeurs obtenues sont

t = 53,80 $\mu$s

$$t'_{X2} = (53,80.10^{-6} - 26,49.10^{-6} - 14,97.10^{-6})$$

$t'_{X2} = 12,34$ $\mu$s

$$V = 76,20.10^{-3}/12,34.10^{-6}$$

Et finalement, la valeur numérique de la vitesse est V = 6 175,04 m/s. Cette valeur est vérifiée avec une mesure classique de vitesse de propagation pour valider la méthode.

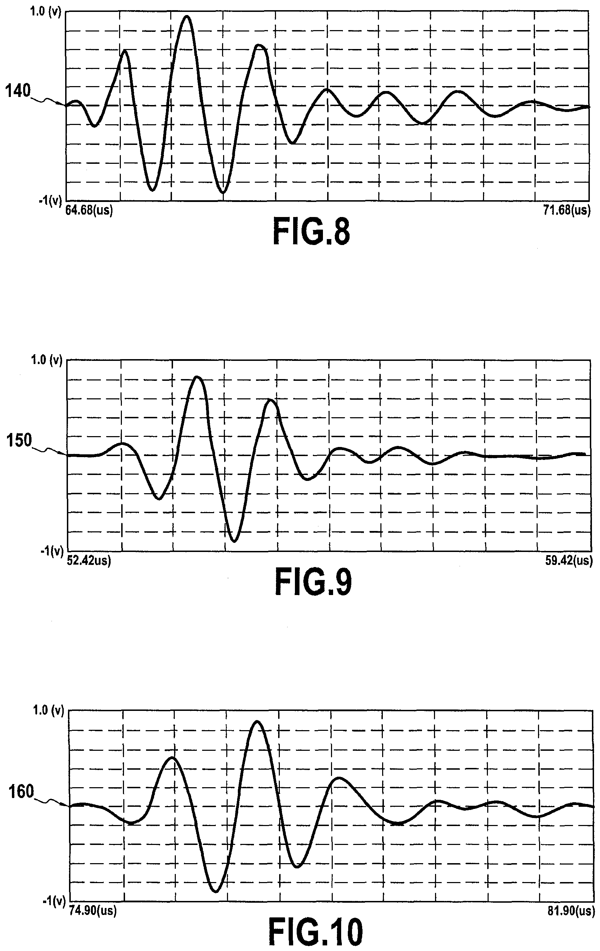

Les **figures 8 à 10** présentent les scans obtenus pour les étapes E2, E3 et E4, pour une cale étagée composite d'épaisseur 47,09 mm, avec un transducteur émettant à 1MHz. Le temps de parcours de l'onde est mesuré sur la base de la naissance de l'onde, référencée respectivement 140, 150 et 160.

Les valeurs obtenues sont tX1+X2+X3 = 90,22 $\mu$s

t = 74,90 $\mu$s

$$t_{X3} = 52,42 / 2 = 26,21 \text{ μs}$$

$$t_{X1} = 64,68 / 2 = 32,34 \text{ μs}$$

$$X2 = (tX1+X2+X3 - tx3 - tX1).V_{eau}$$

$$X2 = (90,22.10^{-6} - 26,21.10^{-6} - 32,34.10^{-6}).1\ 486,54$$

$$X2 = 31,67.10^{-6}.1\ 488,76$$

X2 = 47,078 mm

$$t'_{X2} = t - (t_{X1}+t_{X3})$$

$$t'_{X2} = 74,90.10^{-6} - 26,21.10^{-6} - 32,34.10^{-6}$$

$t'_{X2} = 16,35$ $\mu$s

$$V_{composite} = X2 / t'X2$$

$$V_{composite} = 47,078.10^{-3} / 16,35.10^{-6}$$

Et finalement, la valeur numérique de la vitesse est $V_{composite}$ = 2 879,4 m/s.

On s'intéresse ensuite à l'atténuation de l'onde longitudinale dans le matériau.

L'expression de l'amplitude de l'onde transmise de l'émetteur au récepteur s'écrit : $Y_1 = A_{max}e^{-\alpha 1.(X1+X2+X3)}$, où $A_{Max}$ représente l'amplitude maximale à la surface du traducteur et $\alpha_1$ est l'atténuation de l'onde dans l'eau.

L'expression de l'amplitude de l'onde transmise de l'émetteur au récepteur après traversée du matériau s'écrit : $Y_2 = A_{max}e^{-\alpha 1.(X1+X3)}e^{-\alpha 2X2}t_{12}t_{21}$, où $\alpha_2$ est l'atténuation de l'onde dans le matériau, $t_{12}$ est le coefficient de transmision en amplitude de l'eau au matériau et $t_{21}$ est le coefficient de transmission en amplitude du matériau à l'eau.

L'expression du produit $t_{12}. t_{21}$ est une fonction de l'impédance acoustique du matériau $Z_2 = \rho_2.V_2$ et de celle de l'eau $Z_1 = \rho_1.V_1$. Dans l'expression de l'impédance acoustique, $\rho$ représente la masse volumique et V la vitesse de propagation de l'onde longitudinale à la fréquence considérée.

$$t_{12}t_{21} = \frac{4.Z_1 Z_2}{(Z_1+Z_2)^2}$$

Le rapport des amplitudes $Y_1/Y_2$ s'écrit : $\dfrac{Y_1}{Y_2} = \dfrac{e^{-\alpha 1 X2}}{e^{-\alpha 2 X2}.t_{12}t_{21}}.$

On en déduit l'expression de l'atténuation dans le matériau : $\alpha_2 = \dfrac{1}{x_2}\left( Ln\left(\dfrac{Y_1}{Y_2}.t_{12}t_{21}\right) + \alpha_1 x_2\right).$

Un premier exemple de mise en oeuvre porte sur la cale de matériau composite d'épaisseur 47,09 mm, avec une onde à 2,25 MHz.

Les valeurs numériques de cet exemple sont

$\rho_2$ = 1 525,71 kg/m$^3$

$V_2$ = 2 946,75 m/s

$Z_2$ = 4,39316 M$\Omega_{ac}$

$\rho_{eau}$ = 997,77 kg/m$^3$

$V_{eau}$ = 1 486,54 m/s

$Z_{eau}$ = 1,48322 M$\Omega_{ac}$

$t_{12}.t_{21}$ =0,75478

$X_2$ = 47,078 mm (mesure ultrasonore précise)

$Y_1$=643,2 mV

$Y_2$=15,885 mV

$\alpha_{eau2,25MHz}$=0,972 Neper/m

$\alpha_2$ = 73,61 Neper/m.

Un deuxième exemple de mise en oeuvre porte sur la cale de matériau composite d'épaisseur 47,09 mm, avec une onde à 1 MHz.

$\rho_2$ = 1 525,71 kg/m$^3$

$V_2$ = 2 879,39 m/s

$Z_2$ = 4,39311 M$\Omega_{ac}$

$\rho_{eau}$ = 997,77 kg/m$^3$

$V_{eau}$ = 1 486,54 m/s

$Z_{eau}$ = 1,48322 M$\Omega_{ac}$

$t_{12}.t_{21}$ =0,75479

$X_2$ = 47,078 mm (mesure ultrasonore précise)

$Y_1$=370,25 mV

$Y_2$=16,395 mV

$\alpha_{eau1MHz}$=0,682 Neper/m

$\alpha_2$ = 60,92 Neper/m.

L'invention n'est pas limitée aux modes de réalisation présentés mais s'étend à toutes les variantes dans la portée des revendications.

**Revendications**

**1.** Procédé de caractérisation d'une pièce en matériau composite (30), comprenant une étape de détermination d'une caractéristique d'une onde ultrasonore longitudinale (41) effectuant un parcours dans la pièce (30), où

- on mesure (E1) le temps de propagation d'une onde ultrasonore transmise en l'absence de la pièce, entre un transducteur fonctionnant en émetteur (10) et un transducteur fonctionnant en récepteur (20), séparés par de l'eau,
- on mesure (E2, E3) les temps de propagation d'ondes ultrasonores réfléchies par respectivement une première face (31) de la pièce et une deuxième face (32) de la pièce, chacun des transducteurs (10, 20) fonctionnant en émetteur/récepteur et faisant face à une desdites faces (31,32), pour déterminer l'épaisseur de la pièce (30) qui est parcourue par l'onde ultrasonore longitudinale (41) effectuant un parcours dans la pièce,
- on mesure (E4), un des transducteurs fonctionnant en émetteur (10) et l'autre fonctionnant en récepteur (20), le temps de parcours d'une onde ultrasonore longitudinale transmise (42) par la pièce (30),
- on mesure de plus l'amplitude de l'onde transmise (42) pour déterminer l'atténuation, globale ou linéique, subie par l'onde ultrasonore longitudinale (41) effectuant un parcours dans la pièce (30),

dans lequel l'expression de l'atténuation dans le matériau est :

$$\alpha_2 = \frac{1}{X_2} \left( Ln \left( \frac{Y_1}{Y_2} . t_{12} t_{21} \right) + \alpha_1 X_2 \right)$$

où $X_2$ est l'épaisseur de la pièce, $Y_1$ est l'amplitude de l'onde transmise de l'émetteur au récepteur, $Y_2$ est l'amplitude de l'onde transmise de l'émetteur au récepteur après traversée du matériau, $t_{12}$ est le coefficient de transmision en amplitude de l'eau au matériau et $t_{21}$ est le coefficient de transmission en amplitude du matériau à l'eau, et $\alpha_1$ est l'atténuation de l'onde dans l'eau.

2. Procédé selon la revendication 1, dans lequel on détermine la vitesse de propagation dans la pièce (30) de l'onde ultrasonore longitudinale (41) effectuant un parcours dans la pièce (30).

3. Procédé de caractérisation selon l'une des revendications précédentes, mis en oeuvre pour une pièce en matériau composite tissé 3D.

4. Procédé selon l'une des revendications précédentes, dans lequel l'épaisseur de la pièce ($X_2$) est calculée selon la formule :

$$X_2 = (t_{X1+X2+X3} - t_{X3} - t_{X1}) . V_{eau},$$

où $t_{X1+X2+X3}$ est le temps de propagation de l'onde ultrasonore transmise en l'absence de la pièce, $t_{X1}$ est le temps de propagation d'onde ultrasonore réfléchie par la première face (31) de la pièce, $t_{X3}$ est le temps de propagation d'onde ultrasonore réfléchie par la deuxième face (32) de la pièce, et $V_{eau}$ étant la vitesse de propagation de l'onde dans l'eau.

5. Procédé selon l'une des revendications précédentes, dans lequel le produit $t_{12}t_{21}$ est calculé selon la formule :

$$t_{12} t_{21} = \frac{4 Z_1 Z_2}{(Z_1 + Z_2)^2}$$

où $Z_1$ est l'impédance acoustique de l'eau et $Z_2$ est l'impédance acoustique du matériau.

6. Procédé selon l'une des revendications précédentes, dans lequel le rapport des amplitudes $\frac{Y_1}{Y_2}$ s'écrit :

$$\frac{Y_1}{Y_2} = \frac{e^{-\alpha 1 X2}}{e^{-\alpha 1 X2} t_{12} t_{21}}.$$

**Patentansprüche**

1. Verfahren zur Charakterisierung eines Teils aus einem Verbundstoff (30), umfassend einen Schritt zur Bestimmung einer Eigenschaft einer Ultraschall-Longitudinalwelle (41), die eine Strecke in dem Teil (30) durchquert, wobei

- die Ausbreitungszeit einer Ultraschallwelle gemessen (E1) wird, die bei Fehlen des Teils zwischen einem als Sender (10) fungierenden Wandler und einem als Empfänger (20) fungierenden Wandler übertragen wird, die durch Wasser voneinander getrennt sind,
- die Ausbreitungszeit von Ultraschallwellen gemessen (E2, E3) wird, die jeweils von einer ersten Seite (31) des Teils und einer zweiten Seite (32) des Teils reflektiert werden, wobei jeder der Wandler (10, 20) als Sender/Empfänger fungiert und einer der Seiten (31, 32) zugewandt ist, um die Dicke des Teils (30) zu bestimmen, die von einer Ultraschall-Longitudinalwelle (41) durchlaufen wird, die eine Strecke in dem Teil durchquert,
- die Laufzeit einer Ultraschall-Longitudinalwelle (42) gemessen (E4) wird, die durch das Teil (30) übertragen wird, wobei einer der Wandler als Sender (10) fungiert und der andere als Empfänger (20) fungiert,
- außerdem die Amplitude der übertragenen Welle (42) gemessen wird, um die globale oder längenbezogene Dämpfung zu bestimmen, welche die Ultraschall-Longitudinalwelle (41) erfährt, die eine Strecke in dem Teil (30) durchquert,
wobei der Ausdruck der Dämpfung in dem Material:

$$\alpha_2 = \frac{1}{X_2}\left( Ln\left(\frac{Y_1}{Y_2}.t_{12}t_{21}\right) + \alpha_1 X_2\right)$$

ist, wobei $X_2$ die Dicke des Teils ist, $Y_1$ die Amplitude der von dem Sender an den Empfänger übertragenen Welle ist, $Y_2$ die Amplitude der von dem Sender an den Empfänger übertragenen Welle nach dem Durchlaufen des Materials ist, $t_{12}$ der Amplituden-Durchlässigkeitskoeffizient von Wasser auf das Material ist und $t_{21}$ der Amplituden-Durchlässigkeitskoeffizient von dem Material auf Wasser ist, und $\alpha_1$ die Dämpfung der Welle in Wasser ist.

2. Verfahren nach Anspruch 1, wobei die Ausbreitungsgeschwindigkeit der Ultraschall-Longitudinalwelle (41), die eine Strecke in dem Teil (30) durchquert, in dem Teil (30) bestimmt wird.

3. Verfahren zur Charakterisierung nach einem der vorhergehenden Ansprüche, das für ein Teil aus dreidimensional gewebtem Verbundmaterial durchgeführt wird.

4. Verfahren nach einem der vorhergehenden Ansprüche, wobei die Dicke des Teils ($X_2$) gemäß der Formel berechnet wird:

$$X_2 = (t_{X1+X2+X3} - t_{X3} - t_{X1}) \cdot V_{Wasser},$$

wobei $t_{X1+X2+X3}$ die Ausbreitungszeit der bei Fehlen des Teils übertragenen Ultraschallwelle ist, $t_{X1}$ die Ausbreitungszeit der von der ersten Seite (31) des Teils reflektierten Ultraschallwelle ist, $t_{X3}$ die Ausbreitungszeit der von der zweiten Seite (32) des Teils reflektierten Ultraschallwelle ist, und $V_{Wasser}$ die Ausbreitungsgeschwindigkeit der Welle in Wasser ist.

5. Verfahren nach einem der vorhergehenden Ansprüche, wobei das Produkt $t_{12}t_{21}$ gemäß der Formel berechnet wird:

$$t_{12}t_{21} = \frac{4Z_1 Z_2}{(Z_1 + Z_2)^2}$$

wobei $Z_1$ der akustische Scheinwiderstand von Wasser ist und $Z_2$ der akustische Scheinwiderstand des Materials ist.

6. Verfahren nach einem der vorhergehenden Ansprüche, wobei das Verhältnis der Amplituden $\frac{Y_1}{Y_2}$ wie folgt ausgedrückt wird:

$$\frac{Y_1}{Y_2} = \frac{e^{-\alpha 1 X2}}{e^{-\alpha 1 X2} t_{12} t_{21}}.$$

**Claims**

1. A method of characterizing a part made of composite material (30), comprising a step of determining a characteristic of a longitudinal ultrasound wave (41) traveling along a path within the part (30), where

   - the propagation time of an ultrasound wave transmitted in the absence of the part is measured (E1), between a transducer operating as a transmitter (10) and a transducer operating as a receiver (20), seperated by water,
   - the propagation times of ultrasound waves reflected respectively by a first face (31) of the part and by a second face (32) of the part are measured (E2, E3), each of the transducers (10, 20) operating as transceiver and facing one of said faces (31, 32), in order to determine the thickness of the part (30) traveled by the longitudinal ultrasound wave (41) traveling along a path in the part,
   - the travel time of a longitudinal ultrasound wave (42) transmitted by the part (30) is measured (E4), one of the transducers operating as a transmitter (10) and the other operating as a reveiver (20),
   - the amplitude of the transmitted wave (42) is also measured in order to determine the overall or unit length attenuation to which the longitudinal ultrasound wave (41) is subjected on traveling in the part (30), wherein the expression for attenuation in the material is:

   $$\alpha_2 = \frac{1}{X_2}\left( Ln\left(\frac{Y_1}{Y_2}.t_{12}t_{21}\right) + \alpha_1 X_2\right)$$

   where $X_2$ is the thickness of the part, $Y_1$ is the amplitude of the wave transmitted from the emitter to the receiver, $Y_2$ is the amplitude of the wave transmitted from the emitter to the receiver after passing through the material, $t_{12}$ is the amplitude transmission coefficient from water to the material and $t_{21}$ is the amplitude transmission coefficient from the material to water, and $\alpha_1$ is the attenuation of the wave in water.

2. A method according to claim 1, wherein the propagation speed in the part (30) of the longitudinal ultrasound wave (41) following a path in the part (30) is determined.

3. A characterization method according to any preceding claim, performed for a part made of 3D woven composite material.

4. A method according to any preceding claim, wherein the thickness ($X_2$) of the part is calculated according to the formula:

   $$X_2 = \left(t_{X1+X2+X3} - t_{X3} - t_{X1}\right) \times V_{water},$$

   where $t_{X1+X2+X3}$ is the propagation time of the ultrasound wave transmitted in the absence of the part, $t_{X1}$ is the propagation time of the ultrasound wave reflected by the first face (31) of the part, $t_{X3}$ is the propagation time of the ultrasound wave reflected by the second face (32) of the part, and $V_{water}$ is the propagation speed of the wave in water.

5. A method according to any preceding claim, wherein the product $t_{12}t_{21}$ is calculated according to the formula:

   $$t_{12}t_{21} = \frac{4Z_1 Z_2}{(Z_1 + Z_2)^2}$$

   where Z1 is the acoustic impedance of water and Z2 is the acoustic impedance of the material.

6. A method according to any preceding claim, wherein the amplitude ratio $\frac{Y_1}{Y_2}$ is written as follows:

$$\frac{Y_1}{Y_2} = \frac{e^{-\alpha 1 X 2}}{e^{-\alpha 1 X 2} t_{12} t_{21}}.$$

FIG.1

FIG.2

FIG.3

**FIG.4**

**FIG.5**

**FIG.6**

**FIG.7**

**FIG.8**

**FIG.9**

**FIG.10**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5824908 A
- US 5408882 A
- US 2009277269 A
- US 20040050165 A
- JP H05172793 B